# EUROPEAN PATENT SPECIFICATION

(11) **EP 3 896 302 B1**
(45) Date of publication and mention of the grant of the patent: **11.01.2023**
(21) Application number: 20169788.5
(22) Date of filing: 16.04.2020
(51) Int. Cl.: F16D 1/04, F16D 11/10

(54) **DRIVING MECHANISM USED IN A RAILWAY WELDING MACHINE THAT OPERATES ALONG A RAILWAY TRACK**
ANTRIEBSMECHANISMUS ZUR VERWENDUNG IN EINER GLEISSCHWEISSMASCHINE, DIE ENTLANG EINES EISENBAHNGLEISES ARBEITET
MÉCANISME D'ENTRAÎNEMENT UTILISÉ DANS UNE MACHINE DE SOUDAGE FERROVIAIRE FONCTIONNANT LE LONG D'UNE VOIE FERRÉE

(43) Date of publication of application: 20.10.2021
(73) Proprietor: Goldschmidt Holding GmbH, 04109 Leipzig (DE)
(72) Inventor: Holtkamp, Stefan, 46244 Bottrop Nordrhein-Westfalen (DE); Prill, Frank, 58454 Witten (DE)

(56) References cited:
- EP-A1- 3 398 754
- DE-U1- 8 805 783
- US-A- 4 923 558
- US-A1- 2015 300 413

## Description

### Technical Field

The present invention relates to a driving mechanism used in a railway welding machine that operates along a railway track, more particularly a coupling mechanism.

### Background Art

The repair of a railway track is important for public transportation construction. To secure the safety of passengers or goods, the railway track needs to be repaired and maintained on a regular basis. If a part of the railway track has a defect, a welding worker needs to cut off the defected part and rectify the railway track by welding, e.g., cladding. A railway welding machine with rollers can evenly distribute welding materials on the railway track. However, a conventional railway welding machine has several disadvantages. For example, a conventional coupling mechanism for transmitting the force from the motor to the roller is not well structured in a conventional railway welding machine. The components of the driving mechanism cannot be easily and smoothly operated and are easily worn out. Therefore, the conventional driving mechanism of a railway welding machine needs to be frequently substituted and costs much time and money.

EP3398754A1 discloses a drive system for driving an automatic welding machine designed to join the edges of sealing sheets, wherein the automatic welding machine comprises at least two pressing/advancing rollers located vertically opposite one another, an electric drive motor for at least one of the pressing/advancing rollers, and a transmission gear mechanism connected downstream of the drive motor, and an upper pressing/advancing roller is disposed rotatably about an upper roller rotational axis on a tensioning arm of the automatic welding machine and a lower pressing/advancing roller is disposed rotatably about a lower roller rotational axis on a frame of the automatic welding machine, wherein the tensioning arm is mounted pivotably about a tensioning arm axis on the frame of the automatic welding machine, and the frame is supported by at least two drive rollers, the drive motor and the transmission gear mechanism are rigidly attached to the frame, wherein the drive motor comprises a motor armature rotating about a protruding rotational shaft, and the transmission gear mechanism comprises a rotatable protruding input shaft and a rotatable protruding output shaft, and wherein the tensioning arm axis, the roller rotational axis, the rotational shaft, the input shaft and the output shaft are disposed parallel to one another. The prior art does not solve the problem.

Therefore, it is important to provide a driving mechanism used in a railway welding machine that operates along a railway track, and more particularly a coupling mechanism that can be replaced smoothly, is not worn out easily during operation, and is easily and smoothly coupled.

### Technical Problem to be Solved

The objective of the present invention is to provide a driving mechanism used in a railway welding machine that operates along a railway track, and more particularly a coupling mechanism that can be replaced smoothly, is not worn out easily during operation, and is easily and smoothly coupled.

### Summary of the Invention

The following summarizes some aspects of the present invention to provide a basic understanding of the technology discussed. This summary is not an extensive overview of all contemplated features of the invention, and is intended neither to identify key or critical elements of all aspects of the invention nor to delineate the scope of any or all aspects of the invention. Its sole purpose is to present some concepts of one or more aspects of the invention in a summary form as a prelude to the more detailed description that is presented later.

A first aspect of the present invention provides a driving mechanism used in a railway welding machine that operates along a railway track, comprising: a motor producing a force, and an upper transmission mechanism connected to the motor, including: an upper shaft driven by the motor and including: a shaft key seat, and a shaft key disposed in the shaft key seat, and a coupling mechanism, wherein the upper shaft passes through the coupling mechanism including: a female coupling device, and a male coupling device detachably coupled to the female coupling device through teeth, the male coupling device including a shaft keyway configured to receive and be engaged with the shaft key of the upper shaft so that the upper shaft rotates the male coupling device, wherein when the male coupling device is coupled to the female coupling device, the male coupling device transmits the force to the female coupling device, and when the male coupling device is decoupled from the female coupling device, the male coupling device does not transmit the force to the female coupling device.

In a second aspect of the present invention according to the first aspect, the male coupling device further includes: a male bush configured to be hollow and provided with teeth therein, and a shaft keyway bush connecting to the male bush and disposed between the male bush and the upper shaft, the shaft keyway bush provided with the shaft keyway configured to receive the shaft key of the upper shaft.

In a third aspect of the present invention according to the second aspect, the female coupling device further includes: a female bush configured to be hollow and provided with teeth for engaging the teeth of the male bush, so that when the teeth of the male bush are coupled to the teeth of the female bush, the male coupling device transmits the force to the female coupling device, a sprocket assembly connected to the female bush and provided with a sprocket, and a shaft bush passing through the female bush and the sprocket assembly and disposed around the upper shaft in order to allow independent movement between the upper shaft and the female coupling device.

In a fourth aspect of the present invention according to the third aspect, the sprocket assembly includes a sprocket sleeve for engaging the female bush and holding the sprocket of the sprocket assembly.

In a fifth aspect of the present invention according to any one of the first to fourth aspects, the upper transmission mechanism further includes an operating mechanism connected to the male coupling device, and the operating mechanism includes: a holder extending from the railway welding machine in parallel to the upper shaft, a handle connected to the male coupling device and pivotably connected to the holder, a reinforcement collar flexibly attached to the handle and the male coupling device for facilitating the coupling between the male coupling device and the female coupling device, and a reinforcement collar bush attached to the male coupling device and disposed between the male coupling device and the reinforcement collar in order to allow independent movement between the male coupling device and the operating mechanism.

In a sixth aspect of the present invention according to the fifth aspect, the operating mechanism includes a retaining washer and a screw fixed to the male coupling device to prevent the male coupling device from slipping out of the upper transmission mechanism.

In a seventh aspect of the present invention according to any one of the first to sixth aspects, the driving mechanism further comprises: a first roller rolling along the railway track, a first lower transmission mechanism including a first lower shaft disposed in parallel to the upper shaft, the first lower shaft connected to the first roller and including a first sprocket, and a first chain engaging the sprocket of the sprocket assembly of the female coupling device of the upper transmission mechanism and engaging the first sprocket of the first lower shaft of the first lower transmission mechanism, wherein when the male coupling device is coupled to the female coupling device, the first chain transmits the force from the upper transmission mechanism to the first lower transmission mechanism and rotates the first lower shaft to drive the first roller.

In an eighth aspect of the present invention according to the seventh aspect, the driving mechanism further comprises: a second roller rolling along the railway track, a second lower transmission mechanism including a second lower shaft connected to the second roller, the second lower shaft disposed in parallel to the upper shaft and the first lower shaft and in the same plane of the first lower transmission mechanism, the second lower shaft including a sprocket, the first lower shaft including a second sprocket, and a second chain engaging the second sprocket of the first lower shaft of the first lower transmission mechanism and the sprocket of the second lower shaft of the second lower transmission mechanism and transmits in the direction of the railway track, wherein when the male coupling device is coupled to the female coupling device, the second chain transmits the force from the first lower transmission mechanism to the second lower transmission mechanism and rotates the second lower shaft to drive the second roller.

In a ninth aspect of the present invention according to the eighth aspect, the motor, the upper transmission mechanism, the first lower transmission mechanism, and the second lower transmission mechanism are connected to a body case of the railway welding machine, and the body case provides the coupling mechanism with a protective cover.

In a tenth aspect of the present invention according to the third or fourth aspect, the female bush is made of plastic and the male bush is made of metal.

Advantageously, the coupling mechanism of the driving mechanism can be replaced smoothly, is not worn out easily during operation, and is easily and smoothly coupled.

Further benefits and advantages of the present invention will become apparent after a careful reading of the detailed description with appropriate reference to the accompanying drawings.

### Brief Description of Drawings

Fig. 1 is a perspective view of a railway welding machine that operates along a railway track in accordance with the preferred embodiment of the present invention.
Fig. 2 is a perspective view of a part of the driving mechanism of the railway welding machine of Fig. 1.
Fig. 3 is another perspective view of a part of the driving mechanism of the railway welding machine of Fig. 1.
Fig. 4 is an exploded view of the upper transmission mechanism and the upper shaft of the driving mechanism of Fig. 2.
Fig. 5 is a cross-section view of a part of the upper transmission mechanism and the upper shaft of the driving mechanism of Fig. 4.
Fig. 6 is a perspective view of a part of the driving mechanism used in the railway welding machine of Fig. 2 (without the first chain) and shows the decoupling of the male coupling device and the female coupling device.
Fig. 7 is a perspective view of the upper shaft in accordance with the preferred embodiment of the present invention.
Fig. 8 is a cross-section view of the shaft keyway bush in accordance with the preferred embodiment of the present invention.
Fig. 9 is a cross-section view taken along the line A-A of the shaft keyway bush of Fig. 8 in accordance with the preferred embodiment of the present invention.
Fig. 10 is a cross-section view of the male bush in accordance with the preferred embodiment of the present invention.
Fig. 11 is a perspective view of a part of the first lower transmission mechanism of the driving mechanism of Fig. 1.
Fig. 12 is a perspective view of the first roller and the second roller of a part of the driving mechanism of Fig. 1.

### Detailed Description

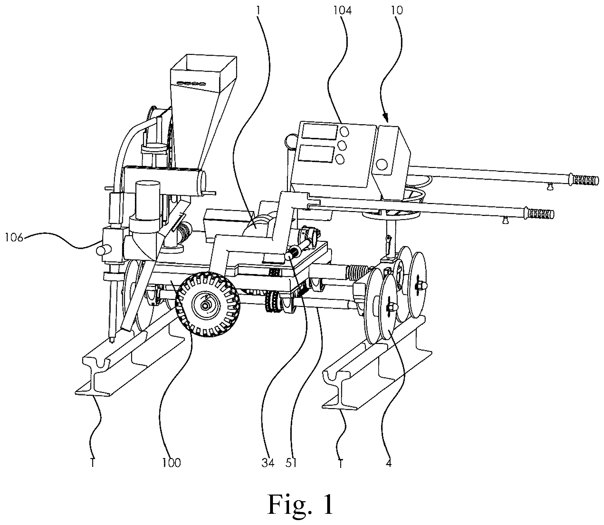

Fig. 1 is a perspective view of a railway welding machine that operates along a railway track in accordance with the preferred embodiment of the present invention. The railway welding machine 10 operates on the railway track T through rollers to repair and maintain the railway track T. The railway welding machine 10 includes a body case 100, a monitoring operator 104, a welding material provider 106, and a driving mechanism 1. The monitoring operator 104 activates the railway welding machine 10 and controls the welding material provider 106. The driving mechanism 1 is used in the railway welding machine 10 and is disposed on the body case 100 of the railway welding machine 10, allowing the railway welding machine 10 to drive on the railway track T. Therefore, the welding material provider 106 may continuously feed welding materials along the railway track T.

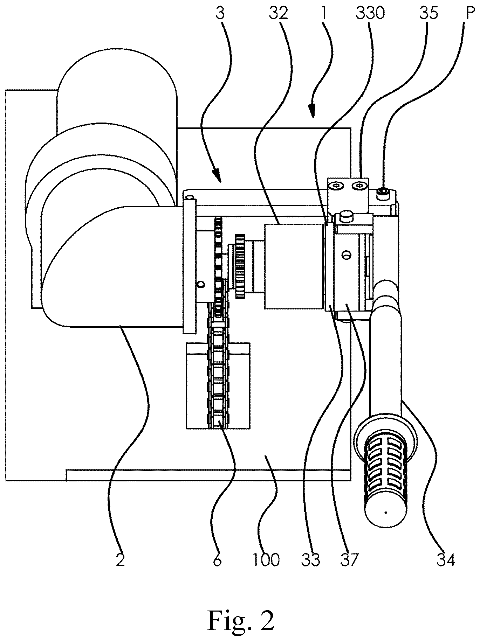

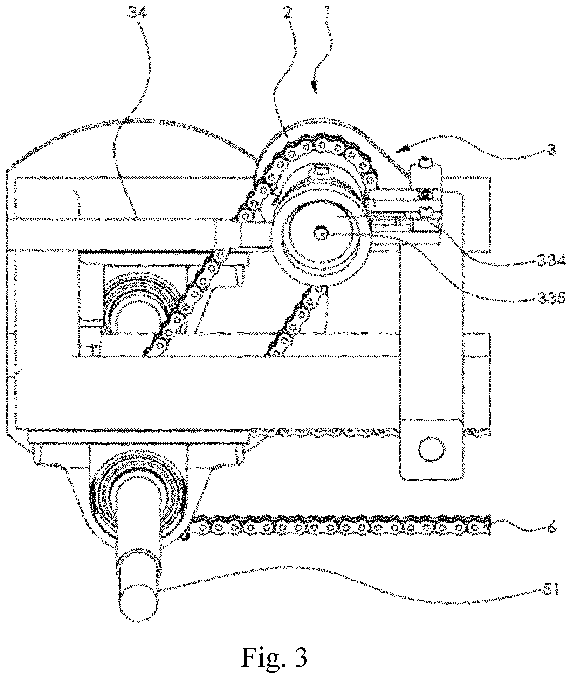

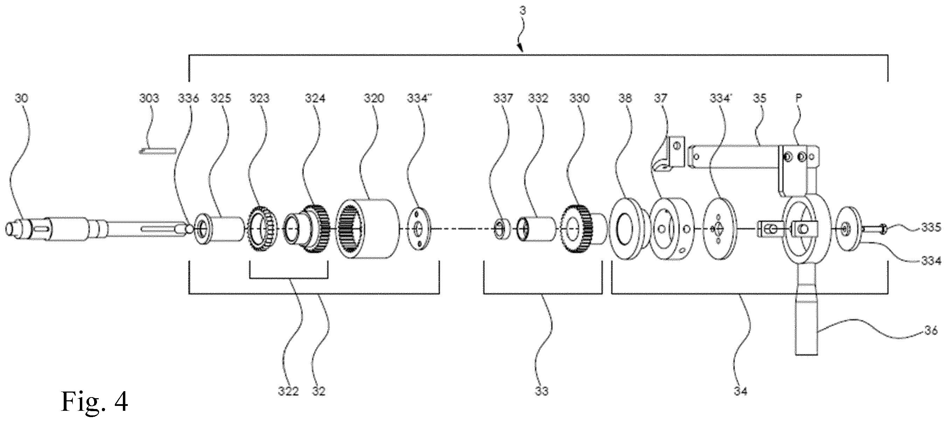

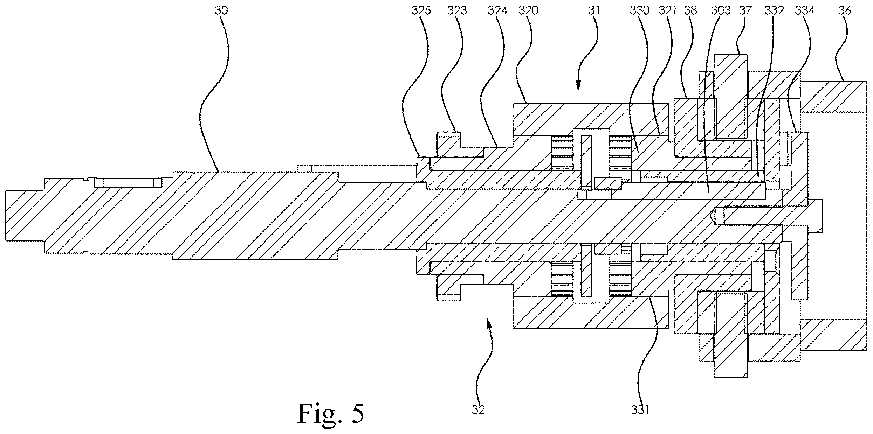

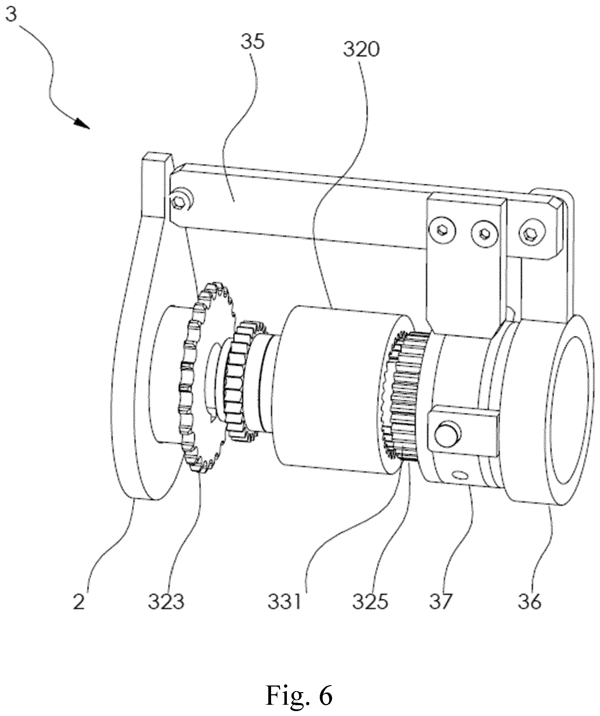

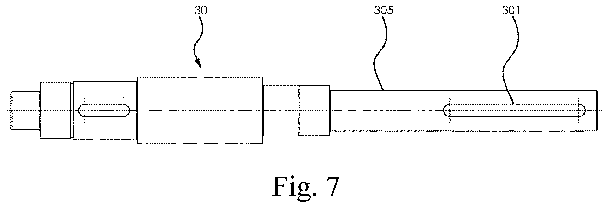

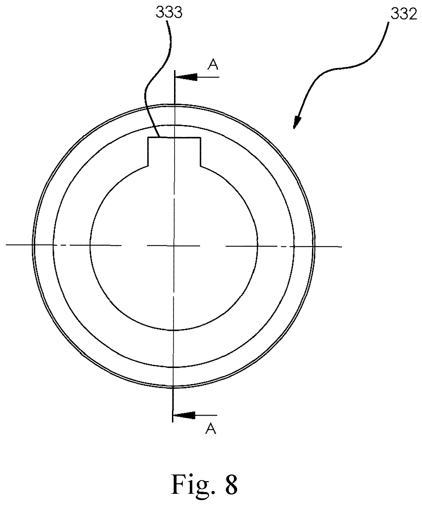

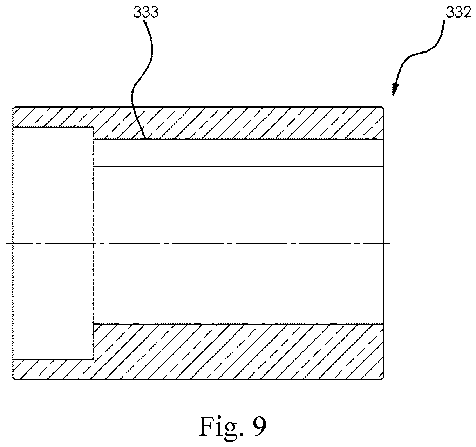

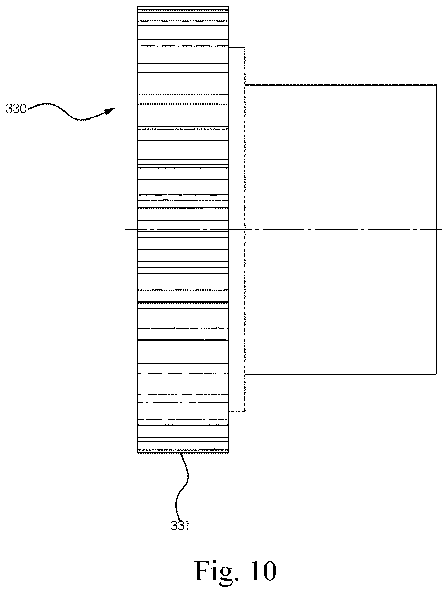

Fig. 2 is a perspective view of a part of the driving mechanism of the railway welding machine of Fig. 1. Fig. 3 is another perspective view of a part of the driving mechanism of the railway welding machine of Fig. 1. Fig. 4 is an exploded view of the upper transmission mechanism and the upper shaft of the driving mechanism of Fig. 2. Fig. 5 is a cross-section view of a part of the upper transmission mechanism and the upper shaft of Fig. 4. Fig. 6 is a perspective view of a part of the driving mechanism used in the railway welding machine of Fig. 2 (without the first chain) and shows the decoupling of the male coupling device and the female coupling device. Fig. 7 is a perspective view of the upper shaft in accordance with the preferred embodiment of the present invention. Fig. 8 is a cross-section view of the shaft keyway bush in accordance with the preferred embodiment of the present invention. Fig. 9 is a cross-section view taken along the line A-A of the shaft keyway bush of Fig. 8 in accordance with the preferred embodiment of the present invention. Fig. 10 is a cross-section view of the male bush in accordance with the preferred embodiment of the present invention.

Please refer to Figs. 1-10 together. The driving mechanism 1 includes a motor 2, an upper transmission mechanism 3, a first lower transmission mechanism 5, a second lower transmission mechanism 8, a first chain 6, a second chain 9, a first roller 4, and a second roller 7. The motor 2, the upper transmission mechanism 3, the first lower transmission mechanism 5, and the second lower transmission mechanism 8 are connected to a body case 100 of the railway welding machine 10.

In Fig. 2, the driving mechanism 1 includes the motor 2 (connected to the upper shaft 30 and partially shown in the drawings), the upper transmission mechanism 3, and the first chain 6 of the driving mechanism 1. The motor 2 is disposed on the body case 100 of the railway welding machine 10 and produces a force to drive the upper transmission mechanism 3. The upper transmission mechanism 3 connected to the motor 2 includes an upper shaft 30 and a coupling mechanism 31. The motor 2 is connected to one end of the upper shaft 30 and drives the upper shaft 30. The upper shaft 30 passes through the coupling mechanism 31, including a shaft key seat 30 and a shaft key 303. The shaft key seat 30 is located at the outer section 305 of the upper shaft 30 which is distanced from the motor 2, as shown in Fig. 7. The shaft key 303 may be partially disposed in the shaft key seat 30, while partially protruding out of the shaft key seat 30 for engaging the coupling mechanism 31.

In Figs. 4 and 5, the coupling mechanism 31 includes a female coupling device 32 and a male coupling device 33. The upper shaft 30 passes through the coupling mechanism 31. In Fig. 3, the body case 100 of the railway welding machine 10 provides a protective cover 102 to cover the driving mechanism 1, so the protective cover 102 can prevent the coupling mechanism 31 from dust and pollution and prevent a welding worker from contacting the driving mechanism 1.

The female coupling device 32 includes a female bush 320, a sprocket assembly 322, and a shaft bush 325. The female bush 320 is configured to be hollow and is provided with teeth 321 therein for engaging the male coupling device 33 and for engaging the sprocket assembly 322. Namely, one end of the female bush 320 connects to the sprocket assembly 322, and the other end of the female bush 320 connects to the male coupling device 33. The sprocket assembly 322 may include a sprocket 323 for engaging the first chain 6 and a sprocket sleeve 324 for engaging the female bush 320. The sprocket sleeve 324 connects to the female bush 320 and holds the sprocket 323. Therefore, when the female bush 320 is driven, the sprocket assembly 322 is driven accordingly. The shaft bush 325 is a cylindrical lining designed to allow independent movement between the female coupling device 32 and the upper shaft 30. Specifically, the upper shaft 30 passes through the shaft bush 325, while a shaft bush 325 passing through the female bush 320 and the sprocket assembly 322 and disposed around the upper shaft 30. Therefore, the shaft bush 325 may prevent the upper shaft 30 from rotating the female bush 320 and the sprocket assembly 322 or allow independent movement between the upper shaft 30 and the female coupling device 32 (such as the female bush 320 and the sprocket assembly 322). When the upper shaft 30 rotates, it does not directly rotate the female coupling device 32.

In order to transmit the force from the upper shaft 30 to the male coupling device 33, the male coupling device 33 includes a shaft keyway 333 configured to receive and be engaged with the shaft key 303 of the upper shaft 30. In a preferred embodiment, the male coupling device 33 includes a male bush 330 and a shaft keyway bush 332. The shaft keyway bush 332 connects to the male bush 330 and lies between the male bush 330 and the upper shaft 30. The shaft keyway 333 of the shaft keyway bush 332 engages the shaft key 303 of the upper shaft 30. Fig. 8 shows the shaft keyway 333 for receiving the shaft key 303. Therefore, the engagement of the upper shaft 30 and the male coupling device 33 allows the upper shaft 30 to rotate the male coupling device 33.

The upper shaft 30 drives the male coupling device 33 by the shaft key 303. However, to drive the female coupling device 32, a welding worker needs to couple the male coupling device 33 to the female coupling device 32. According to the invention in order to transmit the force from the male coupling device 33 to the female coupling device 32, the male bush 330 is configured to be hollow and is provided with protruding teeth 331 for engaging the teeth 321 of the female bush 320. When the teeth 331 of the male bush 330 are coupled to the teeth 321 of the female bush 320, the male coupling device 33 transmits the force to the female coupling device 32. In contrast, Fig. 6 shows that the male coupling device 33 is decoupled from the female coupling device 32. When the teeth 331 of the male bush 330 are decoupled from the teeth 321 of the female bush 320, the male coupling device 33 does not transmit the force to the female coupling device 32 even though the upper shaft 30 may still rotate the male bush 330 of the male coupling device 33. In another embodiment, when the teeth 331 of the male bush 330 are decoupled from the teeth 321 of the female bush 320, a welding worker can move the railway welding machine 10 along the railway track T from one site to another site by his or her hands and rollers can be rotated freely and independently from the force of the motor 2 or from the resistance of the motor 2. In a preferred embodiment, the female bush 320 is made of plastic and the male bush 330 is made of metal. The plastic materials of the female bush 320 have a wear-resistant effect. A retaining washer 334 and a screw 335 are fixed to the male coupling device 33 to prevent the male coupling device 33 from slipping out of the upper transmission mechanism 3. In a preferred embodiment, the upper transmission mechanism 3 is further provided with a threaded bolt 336, a retaining washer 334', a retaining washer 334", and a shaft key collar 337 to reinforce the connection and operation of the upper transmission mechanism 3. Based on the above arrangement of the upper transmission mechanism 3 and the upper shaft 30, the coupling mechanism 31 can be replaced smoothly, is not worn out easily during operation, and is easily and smoothly coupled.

In a preferred embodiment, the upper transmission mechanism 3 may further include an operating mechanism 34, so a welding worker may easily move the teeth 331 of the male coupling device 33 out of or into the teeth 321 of the female coupling device 32. The operating mechanism 34 is connected to the outer end of the male coupling device 33. Specifically, the operating mechanism 34 includes a holder 35, a handle 36, a reinforcement collar 37, and a reinforcement collar bush 38. The holder 35 extends from the railway welding machine 10 in parallel to the upper shaft 30 to support and controls the male coupling device 33. A pivot axis P is provided at the end of the holder 35. The handle 36 is pivotably connected to the holder 35 relative to the pivot axis P and connected to the male coupling device 33. The reinforcement collar 37 flexibly attached to the handle 36 and the male coupling device 33 for facilitating the coupling between the male coupling device 33 and the female coupling device 32. The reinforcement collar 37 advantageously reinforces the attachment of the handle 36 and the male coupling device 33. In addition, Fig. 10 is a cross-section view of the male bush which can also be a connecting hub in accordance with the preferred embodiment of the present invention. The reinforcement collar bush 38 is attached to the male bush 330 of the male coupling device 33 and is disposed between the male coupling device 33 and the reinforcement collar 37. The reinforcement collar bush 38 allows independent movement between the male coupling device 33 and the operating mechanism 34 (such as the holder 35, the handle 36, and the reinforcement collar 37). Therefore, the operating mechanism 34 allows a welding worker to safely control and operate the driving mechanism 1.

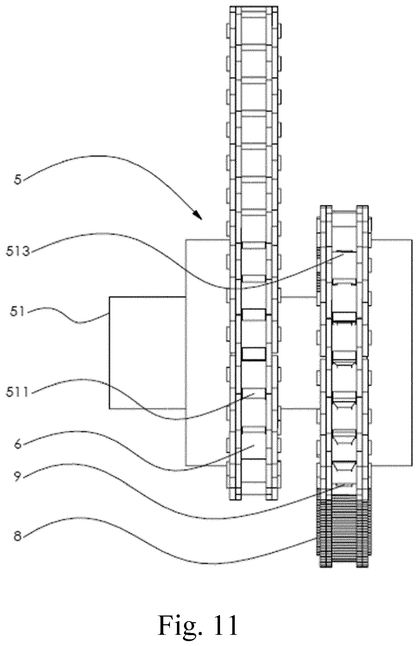

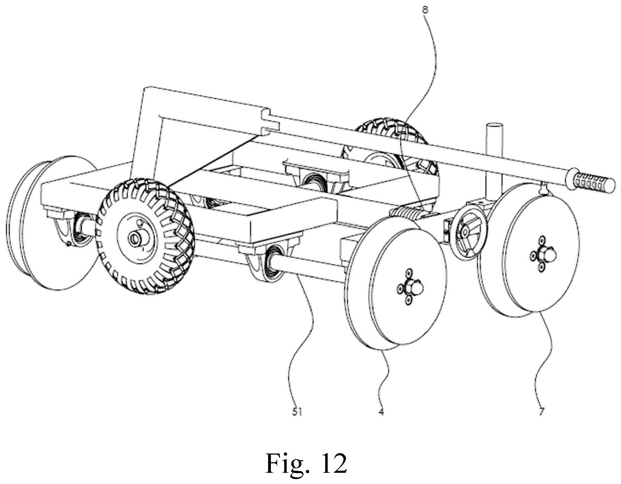

Fig. 11 is a perspective view of a part of the first lower transmission mechanism of the driving mechanism of Fig. 1. Fig. 12 is a perspective view of the first roller and the second roller of a part of the driving mechanism of Fig. 1. Please refer to Figs. 1-12 together. The driving mechanism 1 includes the first roller 4, the first lower transmission mechanism 5, and the first chain 6. The first lower transmission mechanism 5 includes a first lower shaft 51 disposed in parallel to the upper shaft 30, locating below the upper transmission mechanism 3. The first lower shaft 51 is a driven shaft while the upper shaft 30 is a driving shaft. One end of the first lower shaft 51 connects to the first roller 4 which is used for rolling along the railway track T. The other end of the first lower shaft 51 connects to the case body of the railway welding machine 10. In another embodiment, the other end of the first lower shaft 51 connects to another roller.

To transmit the force from the upper transmission mechanism 3 to the first lower transmission mechanism 5, the first chain 6 is provided therebetween. Specifically, the first lower shaft 51 has a first sprocket 511. The first chain 6 engages the sprocket 323 of the upper transmission mechanism 3 and engages the first sprocket 511 of the first lower shaft 51 of the first lower transmission mechanism 5, transmitting the force from the upper shaft 30 to the first lower shaft 51. When the male coupling device 33 is coupled to the female coupling device 32, the first chain 6 drives and transmits the force from the upper transmission mechanism 3 to the first lower transmission mechanism 5. Accordingly, the first chain 6 rotates the first lower shaft 51 to drive the first roller 4, and the railway welding machine 10 can drive on the railway track T to feed welding materials.

Similarly, the driving mechanism 1 may contain a second lower transmission mechanism 8, a second roller 7, and a second chain 9. The second roller 7 is also used for rolling along the railway track T. Specifically, the second lower transmission mechanism 8 includes a second lower shaft connected to the second roller 7. The second lower shaft is disposed in parallel to the upper shaft 30 and the first lower shaft 51 and in the same plane of the first lower transmission mechanism 5. To transmit the second chain 9, the second lower shaft includes a sprocket (not shown in the drawings) and the first lower shaft 51 further includes a second sprocket 513. The second lower shaft is a driven shaft. One end of the second lower shaft connects to the second roller 7, while the other end of the second lower shaft connects to the body case 100 of the railway welding machine 10. In another embodiment, the other end of the second lower shaft connects to another roller. The second chain 9 engages the second sprocket 513 of the first lower shaft 51 of the first lower transmission mechanism 5 and the sprocket of the second lower shaft (not shown in the drawings) of the second lower transmission mechanism 8 and transmits in the direction of the railway track T. When the male coupling device 33 is coupled to the female coupling device 32, the second chain 9 transmits the force from the first lower transmission mechanism 5 to the second lower transmission mechanism 8 and rotates the second lower shaft to drive the second roller 7.

In sum, when the male coupling device 33 is coupled to the female coupling device 32, the force produced by the motor 2 may be transmitted in the following sequence: (1) the force rotates the upper shaft 30, (2) the upper shaft 30 transmits the force to the male coupling device 33 via the engagement of the shaft key 303 of the upper shaft 30 and the shaft keyway 333 of the male coupling device 33, (3) the male coupling device 33 transmits the force to the female coupling device 32 via the coupling of the teeth 331 of the male coupling device 33 and the teeth 321 of the female coupling device 32, (4) the sprocket assembly 322 of the female coupling device 32 transmits the force to the first chain 6, (5) the first chain 6 transmits the force to the first lower shaft 51, (6) the first lower shaft 51 transmits the force to the first roller 4 and to the second chain 9, (7) the second chain 9 transmits the force to the second lower shaft, and (8) the second lower shaft transmits the force to the second roller 7. In this way, a welding worker may easily operate the railway welding machine 10 on the railway track T by controlling the driving mechanism 1 of the railway welding machine 10.

Although the invention has been explained in relation to its preferred embodiments) as mentioned above, it is to be understood that many other possible modifications and variations can be made without departing from the scope of the present invention. It is, therefore, contemplated that the appended claim or claims will cover such modifications and variations that fall within the scope of the invention.

### List of Elements

| | |
|---|---|
| T | railway track |
| 10 | railway welding machine |
| 100 | body case |
| 102 | protective cover |
| 104 | monitoring operator |
| 106 | welding material provider |
| 1 | driving mechanism |
| 2 | motor |
| 3 | upper transmission mechanism |
| 30 | upper shaft |
| 301 | shaft key seat |
| 303 | shaft key |
| 305 | outer section |
| 31 | coupling mechanism |
| 32 | female coupling device |
| 320 | female bush |
| 321 | teeth |
| 322 | sprocket assembly |
| 323 | sprocket |
| 324 | sprocket sleeve |
| 325 | shaft bush |
| 33 | male coupling device |
| 330 | male bush |
| 331 | teeth |
| 332 | shaft keyway bush |
| 333 | shaft keyway |
| 334, 334', 334" | retaining washer |
| 335 | screw |
| 336 | threaded bolt |
| 337 | shaft key collar |
| 34 | operating mechanism |
| 35 | holder |
| 36 | handle |
| 37 | reinforcement collar |
| 38 | reinforcement collar bush |
| 4 | first roller |
| 5 | first lower transmission mechanism |
| 51 | first lower shaft |
| 511 | first sprocket |
| 513 | second sprocket |
| 6 | first chain |
| 7 | second roller |
| 8 | second lower transmission mechanism |
| 9 | second chain |
| P | pivot axis |

## Claims

1. A driving mechanism used in a railway welding machine that operates along a railway track, comprising:
a motor (2) producing a force, and
an upper transmission mechanism (3) connected to the motor (2), **characterized in that** upper transmission mechanism (3) includes:
an upper shaft (30) driven by the motor (2) and including:
a shaft key seat (301), and
a shaft key (303) disposed in the shaft key seat (301), and
a coupling mechanism (31), wherein the upper shaft (30) passes through the coupling mechanism (31) including:
a female coupling device (32), and
a male coupling device (33) detachably coupled to the female coupling device (32) through teeth (331, 321), the male coupling device (33) including a shaft keyway (333) configured to receive and be engaged with the shaft key (303) of the upper shaft (30) so that the upper shaft (30) rotates the male coupling device (33),
wherein when the male coupling device (33) is coupled to the female coupling device (32), the male coupling device (33) transmits the force to the female coupling device (32), and when the male coupling device (33) is decoupled from the female coupling device (32), the male coupling device (33) does not transmit the force to the female coupling device (32).

2. The driving mechanism of Claim 1, wherein the male coupling device (33) further includes:
a male bush (330) configured to be hollow and provided with teeth (331) therein, and
a shaft keyway bush (332) connecting to the male bush (330) and disposed between the male bush (330) and the upper shaft (30), the shaft keyway bush (332) provided with the shaft keyway (333) configured to receive the shaft key (303) of the upper shaft (30).

3. The driving mechanism of Claim 2, wherein the female coupling device (32) further includes:
a female bush (320) configured to be hollow and provided with teeth (321) for engaging the teeth (331) of the male bush (330), so that when the teeth (331) of the male bush (330) are coupled to the teeth (321) of the female bush (320), the male coupling device (33) transmits the force to the female coupling device (32),
a sprocket assembly (322) connected to the female bush (320) and provided with a sprocket (323), and
a shaft bush (325) passing through the female bush (320) and the sprocket assembly (322) and disposed around the upper shaft (30) in order to allow independent movement between the upper shaft (30) and the female coupling device (32).

4. The driving mechanism of Claim 3, wherein the sprocket assembly (322) includes a sprocket sleeve (324) for engaging the female bush (320) and holding the sprocket (323) of the sprocket assembly (322).

5. The driving mechanism of any one of Claims 1-4, wherein the upper transmission mechanism (3) further includes an operating mechanism (34) connected to the male coupling device (33), and the operating mechanism (34) includes:
a holder (35) extending from the railway welding machine (10) in parallel to the upper shaft (30),
a handle (36) connected to the male coupling device (33) and pivotably connected to the holder (35),
a reinforcement collar (37) flexibly attached to the handle (36) and the male coupling device (33) for facilitating the coupling between the male coupling device (33) and the female coupling device (32), and
a reinforcement collar bush (38) attached to the male coupling device (33) and disposed between the male coupling device (33) and the reinforcement collar (37) in order to allow independent movement between the male coupling device (33) and the operating mechanism (34).

6. The driving mechanism of Claim 5, wherein the operating mechanism (34) includes a retaining washer (334) and a screw (335) fixed to the male coupling device (33) to prevent the male coupling device (33) from slipping out of the upper transmission mechanism (3).

7. The driving mechanism of any one of Claims 1-6, further comprising:
a first roller (4) rolling along the railway track (T),
a first lower transmission mechanism (5) including a first lower shaft (51) disposed in parallel to the upper shaft (30), the first lower shaft (51) connected to the first roller (4) and including a first sprocket (511), and
a first chain (6) engaging the sprocket (323) of the sprocket assembly (322) of the female coupling device (32) of the upper transmission mechanism (3) and engaging the first sprocket (511) of the first lower shaft (51) of the first lower transmission mechanism (5),
wherein when the male coupling device (33) is coupled to the female coupling device (32), the first chain (6) transmits the force from the upper transmission mechanism (3) to the first lower transmission mechanism (5) and rotates the first lower shaft (51) to drive the first roller (4).

8. The driving mechanism of Claim 7, further comprising:
a second roller (7) rolling along the railway track (T),
a second lower transmission mechanism (8) including a second lower shaft connected to the second roller (7), the second lower shaft disposed in parallel to the upper shaft (30) and the first lower shaft (51) and in the same plane of the first lower transmission mechanism (5), the second lower shaft including a sprocket, the first lower shaft (51) including a second sprocket (513), and
a second chain (9) engaging the second sprocket (513) of the first lower shaft (51) of the first lower transmission mechanism (5) and the sprocket of the second lower shaft of the second lower transmission mechanism (8) and transmits in the direction of the railway track (T),
wherein when the male coupling device (33) is coupled to the female coupling device (32), the second chain (9) transmits the force from the first lower transmission mechanism (5) to the second lower transmission mechanism (8) and rotates the second lower shaft to drive the second roller (7).

9. The driving mechanism of Claim 8, wherein the motor (2), the upper transmission mechanism (3), the first lower transmission mechanism (5), and the second lower transmission mechanism (8) are connected to a body case (100) of the railway welding machine (10), and the body case (100) provides the coupling mechanism (31) with a protective cover (102).

10. The driving mechanism of Claim 3 or 4, wherein the female bush (320) is made of plastic and the male bush (330) is made of metal.

## Patentansprüche

1. Ein Antriebsmechanismus, der in einer Eisenbahnschweißmaschine verwendet wird, die entlang eines Eisenbahngleises arbeitet, umfassend:
einem Motor (2), der eine Kraft erzeugt, und
einen oberen Übertragungsmechanismus (3), der mit dem Motor (2) verbunden ist, **dadurch gekennzeichnet, dass** der obere Übertragungsmechanismus (3) umfasst:
eine obere Welle (30), die vom Motor (2) angetrieben wird und Folgendes umfasst:
einem Wellensitz (301), und
eine in dem Wellensitz (301) angeordnete Passfeder (303), und
einen Kupplungsmechanismus (31), wobei die obere Welle (30) durch den Kupplungsmechanismus (31) verläuft:
eine weibliche Kupplungsvorrichtung (32), und
eine männliche Kupplungsvorrichtung (33), die mit der weiblichen Kupplungsvorrichtung (32) über Zähne (331, 321) lösbar gekoppelt ist, wobei die männliche Kupplungsvorrichtung (33) eine Wellennut (333) aufweist, die so konfiguriert ist, dass sie die Wellenpassfeder (303) der oberen Welle (30) aufnimmt und mit ihr in Eingriff steht, so dass die obere Welle (30) die männliche Kupplungsvorrichtung (33) dreht,
wobei, wenn die männliche Kupplungsvorrichtung (33) mit der weiblichen Kupplungsvorrichtung (32) gekoppelt ist, die männliche Kupplungsvorrichtung (33) die Kraft auf die weibliche Kupplungsvorrichtung (32) überträgt, und wenn die männliche Kupplungsvorrichtung (33) von der weiblichen Kupplungsvorrichtung (32) entkoppelt ist, die männliche Kupplungsvorrichtung (33) die Kraft nicht auf die weibliche Kupplungsvorrichtung (32) überträgt.

2. Antriebsmechanismus nach Anspruch 1, wobei die männliche Kupplungsvorrichtung (33) ferner umfasst:
eine hohl ausgebildete und mit Zähnen (331) versehene Steckbuchse (330) und
eine Wellennutbuchse (332), die mit der männlichen Buchse (330) verbunden und zwischen der männlichen Buchse (330) und der oberen Welle (30) angeordnet ist, wobei die Wellennutbuchse (332) mit der Wellennut (333) versehen ist, die so konfiguriert ist, dass sie die Wellenpassfeder (303) der oberen Welle (30) aufnimmt.

3. Antriebsmechanismus nach Anspruch 2, wobei die weibliche Kupplungsvorrichtung (32) ferner umfasst:
eine Buchse (320), die hohl ausgebildet und mit Zähnen (321) versehen ist, um in die Zähne (331) der männlichen Buchse (330) einzugreifen, so dass, wenn die Zähne (331) der männlichen Buchse (330) mit den Zähnen (321) der weiblichen Buchse (320) gekoppelt sind, die männliche Kupplungsvorrichtung (33) die Kraft auf die weibliche Kupplungsvorrichtung (32) überträgt,
eine Kettenradanordnung (322), die mit der Buchse (320) verbunden und mit einem Kettenrad (323) versehen ist, und
eine Wellenbuchse (325), die durch die Buchse (320) und die Kettenradanordnung (322) verläuft und um die obere Welle (30) herum angeordnet ist, um eine unabhängige Bewegung zwischen der oberen Welle (30) und der Buchsenkupplungsvorrichtung (32) zu ermöglichen.

4. Antriebsmechanismus nach Anspruch 3, wobei die Kettenradanordnung (322) eine Kettenradhülse (324) zum Eingriff in die Buchse (320) und zum Halten des Kettenrads (323) der Kettenradanordnung (322) aufweist.

5. Antriebsmechanismus nach einem der Ansprüche 1 bis 4, wobei der obere Übertragungsmechanismus (3) ferner einen Betätigungsmechanismus (34) umfasst, der mit der männlichen Kupplungsvorrichtung (33) verbunden ist, und der Betätigungsmechanismus (34) umfasst:
einen Halter (35), der sich von der Eisenbahnschweißmaschine (10) parallel zur oberen Welle (30) erstreckt,
einen Griff (36), der mit der männlichen Kupplungsvorrichtung (33) verbunden und schwenkbar mit dem Halter (35) verbunden ist,
eine Verstärkungsmanschette (37), die flexibel an dem Griff (36) und der männlichen Kupplungsvorrichtung (33) angebracht ist, um die Verbindung zwischen der männlichen Kupplungsvorrichtung (33) und der weiblichen Kupplungsvorrichtung (32) zu erleichtern, und
eine Verstärkungsbundbuchse (38), die an der Steckkupplungsvorrichtung (33) befestigt und zwischen der Steckkupplungsvorrichtung (33) und dem Verstärkungsbund (37) angeordnet ist, um eine unabhängige Bewegung zwischen der Steckkupplungsvorrichtung (33) und dem Betätigungsmechanismus (34) zu ermöglichen.

6. Antriebsmechanismus nach Anspruch 5, wobei der Betätigungsmechanismus (34) eine Haltescheibe (334) und eine Schraube (335) umfasst, die an der Steckkupplungsvorrichtung (33) befestigt sind, um ein Herausrutschen der Steckkupplungsvorrichtung (33) aus dem oberen Übertragungsmechanismus (3) zu verhindern.

7. Der Antriebsmechanismus nach einem der Ansprüche 1 bis 6, der ferner umfasst:
eine erste Rolle (4), die entlang der Bahnstrecke (T) rollt,
einen ersten unteren Getriebemechanismus (5) mit einer ersten unteren Welle (51), die parallel zur oberen Welle (30) angeordnet ist, wobei die erste untere Welle (51) mit der ersten Rolle (4) verbunden ist und ein erstes Kettenrad (511) enthält, und
eine erste Kette (6), die mit dem Kettenrad (323) der Kettenradbaugruppe (322) der weiblichen Kupplungsvorrichtung (32) des oberen Getriebemechanismus (3) und mit dem ersten Kettenrad (511) der ersten unteren Welle (51) des ersten unteren Getriebemechanismus (5) in Eingriff steht,
wobei, wenn die männliche Kupplungsvorrichtung (33) mit der weiblichen Kupplungsvorrichtung (32) gekoppelt ist, die erste Kette (6) die Kraft von dem oberen Übertragungsmechanismus (3) auf den ersten unteren Übertragungsmechanismus (5) überträgt und die erste untere Welle (51) dreht, um die erste Rolle (4) anzutreiben.

8. Der Antriebsmechanismus nach Anspruch 7 umfasst ferner:
eine zweite Rolle (7), die entlang der Bahnstrecke (T) rollt,
einen zweiten unteren Getriebemechanismus (8) mit einer zweiten unteren Welle, die mit der zweiten Rolle (7) verbunden ist, wobei die zweite untere Welle parallel zu der oberen Welle (30) und der ersten unteren Welle (51) und in derselben Ebene wie der erste untere Getriebemechanismus (5) angeordnet ist, wobei die zweite untere Welle ein Kettenrad enthält, wobei die erste untere Welle (51) ein zweites Kettenrad (513) enthält, und
eine zweite Kette (9), die in das zweite Kettenrad (513) der ersten unteren Welle (51) des ersten unteren Getriebemechanismus (5) und das Kettenrad der zweiten unteren Welle des zweiten unteren Getriebemechanismus (8) eingreift und in Richtung der Eisenbahnschiene (T) überträgt,
wobei, wenn die männliche Kupplungsvorrichtung (33) mit der weiblichen Kupplungsvorrichtung (32) gekoppelt ist, die zweite Kette (9) die Kraft von dem ersten unteren Übertragungsmechanismus (5) auf den zweiten unteren Übertragungsmechanismus (8) überträgt und die zweite untere Welle dreht, um die zweite Rolle (7) anzutreiben.

9. Antriebsmechanismus nach Anspruch 8, wobei der Motor (2), der obere Getriebemechanismus (3), der erste untere Getriebemechanismus (5) und der zweite untere Getriebemechanismus (8) mit einem Gehäuse (100) der Eisenbahnschweißmaschine (10) verbunden sind, und das Gehäuse (100) den Kupplungsmechanismus (31) mit einer Schutzabdeckung (102) versieht.

10. Antriebsmechanismus nach Anspruch 3 oder 4, wobei die weibliche Buchse (320) aus Kunststoff und die männliche Buchse (330) aus Metall hergestellt ist.

## Revendications

1. Mécanisme d'entraînement utilisé dans une machine de soudage ferroviaire qui fonctionne le long d'une voie ferrée, comprenant :
un moteur (2) produisant une force, et
un mécanisme de transmission supérieur (3) relié au moteur (2), **caractérisé en ce que** le mécanisme de transmission supérieur (3) comprend :
un arbre supérieur (30) entraîné par le moteur (2) et comprenant :
un siège de clavette d'arbre (301), et
une clé d'arbre (303) disposée dans le siège de clé d'arbre (301), et
un mécanisme d'accouplement (31), dans lequel l'arbre supérieur (30) passe à travers le mécanisme d'accouplement (31) comprenant :
un dispositif d'accouplement femelle (32), et
un dispositif d'accouplement mâle (33) couplé de manière détachable au dispositif d'accouplement femelle (32) par l'intermédiaire de dents (331, 321), le dispositif d'accouplement mâle (33) comprenant une rainure de clavette d'arbre (333) configurée pour recevoir et être engagée avec la clavette d'arbre (303) de l'arbre supérieur (30) de sorte que l'arbre supérieur (30) fasse tourner le dispositif d'accouplement mâle (33),
dans lequel lorsque le dispositif d'accouplement mâle (33) est couplé au dispositif d'accouplement femelle (32), le dispositif d'accouplement mâle (33) transmet la force pour le dispositif d'accouplement femelle (32), et lorsque le dispositif d'accouplement mâle (33) est découplé du dispositif d'accouplement femelle (32), le dispositif d'accouplement mâle (33) ne transmet pas la force au dispositif d'accouplement femelle (32).

2. Mécanisme d'entraînement selon la revendication 1, dans lequel le dispositif d'accouplement mâle (33) comprend en outre :
une douille mâle (330) configurée pour être creuse et pourvue de dents (331) à l'intérieur, et
une douille de clavette d'arbre (332) reliée à la douille mâle (330) et disposée entre la douille mâle (330) et l'arbre supérieur (30), la douille de clavette d'arbre (332) étant pourvue de la clavette d'arbre (333) configurée pour recevoir la clavette d'arbre (303) de l'arbre supérieur (30).

3. Mécanisme d'entraînement selon la revendication 2, dans lequel le dispositif d'accouplement femelle (32) comprend en outre :
une douille femelle (320) configurée pour être creuse et pourvue de dents (321) pour s'engager avec les dents (331) de la douille mâle (330), de sorte que lorsque les dents (331) de la douille mâle (330) sont couplées aux dents (321) de la douille femelle (320), le dispositif d'accouplement mâle (33) transmet la force au dispositif d'accouplement femelle (32),
un ensemble de pignon (322) relié à la douille femelle (320) et pourvu d'un pignon (323), et
une douille d'arbre (325) passant à travers la douille femelle (320) et l'ensemble de pignon (322) et disposée autour de l'arbre supérieur (30) afin de permettre un mouvement indépendant entre l'arbre supérieur (30) et le dispositif d'accouplement femelle (32).

4. Mécanisme d'entraînement selon la revendication 3, dans lequel l'ensemble de pignon (322) comprend un manchon de pignon (324) pour s'engager dans la douille femelle (320) et maintenir le pignon (323) de l'ensemble de pignon (322).

5. Mécanisme d'entraînement de l'une quelconque des revendications 1 à 4, dans lequel le mécanisme de transmission supérieur (3) comprend en outre un mécanisme de fonctionnement (34) relié au dispositif d'accouplement mâle (33), et le mécanisme de fonctionnement (34) comprend :
un support (35) s'étendant depuis la machine à souder les rails (10) parallèlement à l'arbre supérieur (30),
une poignée (36) reliée au dispositif d'accouplement mâle (33) et reliée de manière pivotante au support (35),
un collier de renforcement (37) fixé de manière flexible à la poignée (36) et au dispositif d'accouplement mâle (33) pour faciliter l'accouplement entre le dispositif d'accouplement mâle (33) et le dispositif d'accouplement femelle (32), et
une douille de collier de renforcement (38) fixée au dispositif d'accouplement mâle (33) et disposée entre le dispositif d'accouplement mâle (33) et le collier de renforcement (37) afin de permettre un mouvement indépendant entre le dispositif d'accouplement mâle (33) et le mécanisme d'actionnement (34).

6. Mécanisme d'entraînement selon la revendication 5, dans lequel le mécanisme d'actionnement (34) comprend une rondelle de retenue (334) et une vis (335) fixées au dispositif d'accouplement mâle (33) pour empêcher le dispositif d'accouplement mâle (33) de glisser hors du mécanisme de transmission supérieur (3).

7. Le mécanisme d'entraînement de l'une quelconque des revendications 1 à 6, comprenant en outre :
un premier rouleau (4) roulant le long de la voie ferrée (T),
un premier mécanisme de transmission inférieur (5) comprenant un premier arbre inférieur (51) disposé parallèlement à l'arbre supérieur (30), le premier arbre inférieur (51) étant relié au premier rouleau (4) et comprenant un premier pignon (511), et
une première chaîne (6) engageant le pignon (323) de l'ensemble de pignons (322) du dispositif d'accouplement femelle (32) du mécanisme de transmission supérieur (3) et engageant le premier pignon (511) du premier arbre inférieur (51) du premier mécanisme de transmission inférieur (5),
dans lequel, lorsque le dispositif d'accouplement mâle (33) est couplé au dispositif d'accouplement femelle (32), la première chaîne (6) transmet la force du mécanisme de transmission supérieur (3) au premier mécanisme de transmission inférieur (5) et fait tourner le premier arbre inférieur (51) pour entraîner le premier rouleau (4).

8. Le mécanisme d'entraînement de la revendication 7, comprenant en outre :
un deuxième rouleau (7) roulant le long de la voie ferrée (T),
un second mécanisme de transmission inférieur (8) comprenant un second arbre inférieur relié au second rouleau (7), le second arbre inférieur étant disposé parallèlement à l'arbre supérieur (30) et au premier arbre inférieur (51) et dans le même plan que le premier mécanisme de transmission inférieur (5), le second arbre inférieur comprenant un pignon, le premier arbre inférieur (51) comprenant un second pignon (513), et
une seconde chaîne (9) engageant le second pignon (513) du premier arbre inférieur (51) du premier mécanisme de transmission inférieur (5) et le pignon du second arbre inférieur du second mécanisme de transmission inférieur (8) et transmettant dans la direction de la voie ferrée (T),
dans lequel, lorsque le dispositif d'accouplement mâle (33) est couplé au dispositif d'accouplement femelle (32), la seconde chaîne (9) transmet la force du premier mécanisme de transmission inférieur (5) au second mécanisme de transmission inférieur (8) et fait tourner le second arbre inférieur pour entraîner le second rouleau (7).

9. Mécanisme d'entraînement selon la revendication 8, dans lequel le moteur (2), le mécanisme de transmission supérieur (3), le premier mécanisme de transmission inférieur (5) et le second mécanisme de transmission inférieur (8) sont reliés à un boîtier de corps (100) de la machine à souder les rails (10), et le boîtier de corps (100) fournit au mécanisme d'accouplement (31) un couvercle de protection (102).

10. Mécanisme d'entraînement selon la revendication 3 ou 4, dans lequel la douille femelle (320) est faite de plastique et la douille mâle (330) est faite de métal.
